# EUROPEAN PATENT SPECIFICATION

(11) **EP 4 108 787 B1**
(45) Date of publication and mention of the grant of the patent: **07.05.2025**
(21) Application number: 21180665.8
(22) Date of filing: 21.06.2021
(51) Int. Cl.: C21D 8/12, B32B 15/08, H01F 1/16, H01F 1/18, B82Y 30/00, H01F 1/00, B32B 15/18, B82Y 25/00, C22C 38/02

(54) **METHOD FOR PRODUCING ELECTRICALLY NON-ORIENTED ELECTRICAL STEEL STRIP OR SHEET WITH AN INSULATING COATING COMPRISING MAGNETIC NANO-PARTICLES, AND CORE STACK PRODUCED THEREFROM**
VERFAHREN ZUR HERSTELLUNG VON ELEKTRISCH NICHT ORIENTIERTEM ELEKTROSTAHLBAND ODER -BLECH MIT EINER ISOLIERENDEN BESCHICHTUNG ENTHALTEND MAGNETISCHE NANOPARTIKEL, UND DARAUS HERGESTELLTER KERNSTAPEL
PROCÉDÉ DE PRODUCTION DE BANDES OU DE TÔLES D'ACIER ÉLECTRIQUE NON ORIENTÉES AVEC UN REVÊTEMENT ISOLANT COMPRENANT DES NANOPARTICULES MAGNÉTIQUES, ET PILE DE NOYAUX À PARTIR DE CELLES-CI

(43) Date of publication of application: 28.12.2022
(73) Proprietor: Tata Steel UK Limited, London SW1X 7HS (GB)
(72) Inventor: MILLS, Christopher Alan, Swansea, SA3 5BL (GB)
(74) Representative: Wynne-Jones IP Limited

(56) References cited:
- KR-A- 20130 010 224
- US-A1- 2019 304 647

## Description

### Field of the invention

This invention relates to a method for producing coated electrical steels and to a core stack produced from the coated electrical steels.

### Background of the invention

Electrical steel, also known as silicon steel, is a steel alloy of iron and silicon used to make the cores of motors, transformers and generators. This type of steel can generate various magnetic properties, has high permeability and low amounts of core loss. It has a small hysteresis curve, meaning reduced magnetic hysteresis as well as iron losses, or energy loss. There are two kinds of structures for electrical steel; grain-oriented (GO-ES) and non-oriented (NGO-ES). Grain-oriented electrical steel has a uniform, consistent direction of grains in its structure which allows for greater flux density and magnetic saturation. Most commonly, grain-oriented electrical steel is used for transformers which have a predictable and specific magnetic field direction. NGO-ES is a steel of which has uniform magnetic property in all directions and is widely used in a motor, an iron core of an electric generator, an electric motor, a small transformer, and the like.

Practical use of NGO-ES almost invariably involves stacking a plurality of so called laminates. These laminates are normally stamped or cut out of a strip of NGO-ES. These stacked laminates have to be held together, which was traditionally done by means of welds or a containment frame. The efficiency of an electric motor may be impaired by interlocks or spot welds that hold the laminated stacks together. Any stresses imparted by these techniques introduce magnetic boundary changes into the stacks which decrease their magnetic permeability, and hence reduce their performance.

The laminates are separated from each other by an insulating layer to prevent electrical contact between the NGO-ES sheets, and these insulating layers are normally applied before producing the laminates from the strip of NGO-ES. However, in an electrifying world and to push back on carbon emissions, the ever increasing use of high-end, high efficiency and ever smaller motors and generators requires an excellent insulating property between the layers of the NGO-ES laminates. The minimization of eddy current losses drives towards increasing the insulating coating thickness. However, if the coating thickness is increased, properties like weldability, heat resistance, adherence before/after stress relief annealing and lamination factor (aka stacking factor) may be adversely affected.

Commercial electrical steel alloys usually have silicon content up to 3.5%. Higher concentrations result in brittleness during cold rolling. Manganese and Aluminium can be added up to 0.5%.

NGO-ES usually has a silicon level of 2 to 3.5% and has similar magnetic properties in all directions, i.e., it is isotropic.

KR20130010224 discloses a coating solution and a manufacturing method thereof, for forming an insulation film on a grain-oriented electrical steel sheet comprising core-cell nano particles of 0.05-70 weight %, and phosphate of 30-99.5 weight %. The core-cell nano particle includes a core consisting of magnetic nano particles, and a cell having at least one functional group being combined on the surface of the core. The magnetic nano particle includes at least one metal selected from a group consisting of Fe, Co, Ni, Pt, and Mn, or its oxide. The cell is at least one metal selected from among Si, Al, Mn, Zr, and Ti, or a form of its oxide bonded with hydroxyl.

US2019304647 discloses a production of discontinuous, flake-shaped particles of a soft magnetic material, coating the flake-shaped particles with an electrically insulating coating, and consolidating the coated flaked-shaped particles to form a soft magnetic bulk shape. The consolidated bulk shape can comprise a layer or a simple or complex 3D magnet part shape, which has a consolidated layered microstructure that includes laminated soft magnetic regions that are substantially encapsulated by an electrical insulating layer to increase the resistivity of soft magnetic material.

### Objectives of the invention

It is an object of the invention to provide a method for producing coated electrical steels that enable low eddy current losses.

It is also an object of the invention to provide a method for producing coated electrical steels that enable a higher lamination factor.

It is also an object of the invention to provide a core stack with low eddy current losses.

It is also an object of the invention to provide a core stack with an improved lamination factor.

### Description of the invention

One or more of the objects is reached with a method for producing an electrically insulating non-oriented electrical steel strip or sheet for producing laminates for electrical steel stacks, comprising the subsequent steps of:
- preparing a cold-rolled non-oriented electrical steel strip or sheet;
- annealing the cold-rolled steel strip or sheet;
- coating the annealed electrical steel strip or sheet on one or both sides with
   i). a curable organic lacquer provided with dispersed magnetic nanoparticles followed by at least a partial curing of the lacquer to form a green insulation layer to allow transportation, cutting or shaping, or with
   ii). a solid polymer film with embedded magnetic nanoparticles applied onto the annealed steel strip or sheet by direct extrusion or film lamination,
   to provide an electrically insulating layer on the one or both sides of the annealed electrical steel strip or sheet;
- optionally coiling the coated strip or stacking the coated sheet.

The term "green" is used to indicate that the curing of the lacquer is not yet complete. The partial curing ensures that the coated electrical steel strip or sheet is no longer sticky and therefore the strip can be coiled safely or, if sheets or parts were cut from the strip, stacked so that the electrically insulating non-oriented electrical steel can be safely stored or transported. Only after a full curing treatment will the final properties, such as adhesive strength and hardness, of the lacquer be obtained.

Preferred embodiments are provided in the dependent claims.

ISO/TS 80004-1:2015(en) defines a nanomaterial as a material with any external dimension in the nanoscale. The practical lower limit is about 1 nm and a practical upper limit is about 100 nm, this relates to the dimension in one direction, so that only one dimension must be smaller than about 100 nm. A whisker or platelet with a length of several µm but with a thickness of 20 nm is still considered a nanoparticle within the context of the standard and this invention. According to ISO/TS 80004-1:2015(en) a nano-object is a discrete piece of material with one, two or three external dimensions in the nanoscale, wherein the second and third external dimensions are orthogonal to the first dimension and to each other. In the context of this invention the magnetic nanoparticles are nano-objects with at least one dimension between 1 and 100 nm, optionally the magnetic nanoparticles are nano-objects with two dimensions between 1 and 100 nm or the magnetic nanoparticles are nano-objects with three dimensions between 1 and 100 nm.

In the method according to the invention the starting material is a conventional non-oriented electrical steel strip (NGO-ES) that is cold rolled and recrystallisation annealed to ensure that aspects like thickness, microstructure and crystallographic texture are within the required specifications. After annealing the strip is coated with an electrically insulating layer on one side, and preferably on both sides, wherein the layer is provided with dispersed magnetic nanoparticles.

The insulating layer may be provided in the form of a cured organic lacquer provided with dispersed magnetic nanoparticles or it may be provided in the form of a polymer film with dispersed or embedded magnetic nanoparticles.

In an electrical steel stack, the "lamination factor" is related to the proportion of electrical steel in the stack. The more electrical steel, the closer the lamination factor is to 1. The lacquers used for bonding the laminations of electrical steel therefore must be thin enough to maximize the lamination factor, but thick enough to provide an electrically resistant bonding layer between the neighbouring laminations. The reason why it is beneficial to embed the magnetic nanoparticles in the insulation layer is that this is a way to increase the so-called lamination factor of a core stack that is produced from this material by increasing the amount of magnetic material in the stack. If the insulation layers, which are normally not contributing to the lamination factor, can be made to contribute by embedding magnetic nanoparticles in the insulation layer, while retaining the bonding capacity and the insulating properties and no increase, or at no significant increase that nullifies the effect of the addition of the magnetic nanoparticles in the insulation layer, of the insulating layer thickness, then the lamination factor of the stack increases as a result of the presence of the embedded magnetic nanoparticles.

The embedded magnetic nanoparticles must be small enough to be dispersed or embedded in the insulating layer below the percolation threshold, or be electrically insulating, to ensure no electrical contact occurs through the lacquer but must have sufficient magnetic component to contribute positively to the lamination factor.

To minimise the risk of unwanted electrical connections between the electrical steel laminations when using electrically conducting or semi-conducting magnetic nanoparticles, a three layer coating could be produced where the coating layers adjacent to the electrical steel contain no nanoparticles, but the central layer contains nanoparticles. In this way, upon bonding, there is less risk of producing electrical contacts between laminations. In another embodiment the magnetic nanoparticles consist of sufficiently electrically insulted nanoparticles (e.g. in core-shell nanomaterial systems), so as to preserve the electrical insulation properties of the lacquer coating.

Nanoparticle magnetic moments can be aligned if required through the addition of an external magnetic field, applied externally or through the electrical steel laminations, during curing of the applied lacquer or bonding of the laminations in the stack.

It is important to note that there is a limit to the amount of particles that can be included in the lacquer. If the amount exceeds a certain threshold value, the percolation threshold, the particles will form a contiguous network that renders the layer electrically conductive. The percolation threshold is a mathematical concept in percolation theory that describes the formation of long-range connectivity in random systems. Below the threshold a giant connected component does not exist; while above it, there exists a giant component of the order of system size.

An additional advantage is that interlaminar corrosion is prevented.

In an embodiment the insulating layer with the embedded magnetic particles may be applied on one side only. If a lacquer is applied on the other side without the particles, then the maximum benefit of the invention may not be completely obtained, but this may be preferable in case there is a need for a lacquer that has a higher insulating capacity or a better adhesion performance. However, it is preferable that the insulating layer with the embedded magnetic particles is applied on both sides and by selecting a lacquer with sufficient insulating capacity and adhesion performance while still contributing positively to the lamination factor.

In the embodiment wherein the insulating layer is provided in the form of a cured lacquer provided with dispersed magnetic nanoparticles the following applies. After applying the lacquer with magnetic nanoparticles dispersed therein to the annealed strip and subjecting the thusly coated strip to at least a partial curing of the lacquer, the dispersed magnetic nanoparticles stay in their dispersed condition in an at least partially cured lacquer matrix. The lacquer is preferably partially cured because then the coated electrical steel strip or sheet is no longer sticky and therefore the strip can be coiled safely or, if sheets were cut from the strip, stacked so that the electrically insulating non-oriented electrical steel can be safely stored or transported. When laminates are produced from the coated steel strip or sheet, for instance by stamping or cutting, and stacked to form an electrical steel stack then the stack may be subjected to the final curing to achieve a permanent bond between the laminates of the electrical steel stack.

In an embodiment the lacquer with the dispersed magnetic nanoparticles is applied to the strip or sheet by roll-coating. An optional magnetic field may be applied during coating to align the nanoparticle magnetic moments as required. Roll-coating This allows the application of a smooth, consistent and homogeneous lacquer layer in an industrial annealing and coating line. However, the invention is not limited to this application technology. As long as nanoparticles can be dispersed in the lacquer, the lacquer can be utilised in most coating technologies. Other application techniques include spray coating, dip coating and bar coating.

The magnetic nanoparticles can be incorporated in the bonding lacquer by direct dispersion in the bonding lacquer solution using agitation, such as ultrasonic cavitation, or by incorporation of the nanoparticle in a core-shell nanostructure, such as a silicon oxide shell, which aids with dispersion in the bonding lacquer solution and/or provides electrical insulation to the nanoparticle, or by chemical attachment of the nanoparticle or core shell nanoparticle to the polymer chains of the bonding lacquer using, for example, hydroxyl or amide bonding.

The final curing of the stack is preferably performed under a compressive force to ensure the adhesion of the stacked laminates. Preferably the final curing is performed while a magnetic field is applied to align the magnetic dipoles in the nanoparticles. The lamination factor of the stack that is producible from the steel strip or sheet according to the invention is increased by the presence of the magnetic nanoparticles, and the alignment of the magnetic dipoles of the magnetic nanoparticles contributes to the magnetic coupling to the electrical steel laminations and hence improve the overall performance of the stack.

The lacquer is typically a polymeric material that dries by solvent evaporation to produce a hard, durable finish. Examples include, but not exclusively, acrylic polymers and polymers containing epoxy-type moieties.

Advantage of the bonding lacquer technique are:
- stronger cohesive properties than the alternative spot welds or mechanical interlocks for thin electrical steel laminations,
- removes the point mechanical stresses imposed on the stack by the spot welds or mechanical frame which are detrimental to the magnetic properties of the stack,
- and physically constrains the laminations across almost all their surface area, mitigating for detrimental magnetostriction effects.

In the embodiment wherein the insulating layer is provided in the form of polymer film with dispersed or embedded magnetic nanoparticles the following applies. The polymer film with magnetic nanoparticles can be applied to the electrical steel by direct extrusion of a liquid polymer film with magnetic nanoparticles dispersed therein to the substrate, or by laminating a solid polymer film with embedded magnetic nanoparticles to the electrical steel. The adhesion between the electrical steel and the polymer film may be obtained by heat bonding to the pre-heated electrical steel substrate alone, or it can be obtained by using a dedicated adhesion layer optionally in combination with heat bonding the solid polymer film to the pre-heated electrical steel substrate. So the heat bonding may be performed with or without an adhesion layer between the polymer film and the steel.

The properties of the insulating layer preferably are as follows:
- C3 or C3A classification (ASTM A976-03)
- Thickness = 0.10-6.0 µm
- Coating weight = 0.10-3.0 g/m²)
- Surface insulation resistance > 20 Ωcm²/lamination (ASTM A717)

Additional preferable properties are relating to the durability of the layers are:
- Resistant to 10 minutes boiling H₂O
- Resistant to Ethanol rub (x10)

The temperature at which the lacquer is cured or at which the polymer film is applied is preferably between 50 and 300 °C, and preferably at most 250 °C. The resistance to the boiling water is indicative of the polymer resisting swelling or chemical degradation by the water, and the resistance to an ethanol rub means the resistance of the layer to swelling or chemical degradation when the layer is rubbed 10 times by a cloth wetted with ethanol.

The thickness of the electrically insulating layer is preferably at most 2.5 µm, and the coating weight is preferably at most 2.0 g/m². The surface insulation resistance is preferably at least 200 Ωcm²/lamination.

The amount of nanoparticles in the lacquer or polymer layer has to be below the amount at which the nanoparticles form an electrically conductive path through the insulation layer, because then the layer is no longer electrically insulating. Preferably the amount of nanoparticles in the insulation layer is between 1 and 50 vol.%.

Examples of suitable materials for the magnetic nanoparticles are Fe, Co, Ni, Pt, Ti, Zn, Cr, Al, Si, their alloys or organometallics. The magnetic nanoparticles may also be selected from the oxides of Fe, Co, Ni, Pt, Ti, Zn, Cr, Al or Si.

Preferably the magnetic material should have a high relative magnetic permeability µᵣ of between 10² and 10⁶, where relative magnetic permeability is the quotient of the nanoparticle magnetic permeability, µ, versus the permeability of a vacuum. µ₀ (i.e. µr = µ/µ0). As a comparison, electrical steel has a relative permeability of about 4000.

To reduce hysteresis losses, the magnetic nanoparticles should also have a low magnetic coercivity. Magnetic coercivity is a measure of the ability of a ferromagnetic material to withstand an external magnetic field without becoming demagnetized. Coercivity is usually measured in oersted or ampere/meter units and is denoted H_{C}. For the purpose of the invention H_{C} of the magnetic nanoparticles is preferably between 0.0001 and 20 kA/m. As a comparison, electrical steel has a coercivity of approximately 0.05 kA/m.

It is preferable that at least one of the dimensions of the magnetic nanoparticles is between 1 and 100 nm. The nanoparticles do not have to be spherical, but could be rod or sheet like to improve nanoparticle stacking in the coating, hence the requirement that at least one dimension be 100 nm or less. It could also be that smaller magnetic nanoparticles are supported on carrier nanomaterials, such as carbon nanotubes, graphene etc. to assist with processing of the loaded layer. In case the magnetic nanoparticles are of the platelet type, then at least one dimension is from 1 to 100 nm. In case the nanoparticles are of the globular type, then the dimension in all directions is between 1 and 100 nm. Preferably at least one dimension of the magnetic nanoparticles is at least 2 and/or at most 50 nm. More preferably at least one dimension of the magnetic nanoparticles is at most 25 nm. Platelet materials may be beneficial as they tend to align when confined in a thin lacquer or polymer layer.

In an embodiment the thickness of the NGO-ES is at least 0.15 mm and at most 0.65 mm. It is preferable that the thickness is at least 0.15 mm and/or that it does not exceed 0.40 mm. Typical electrical steel thicknesses have been above 0.30 mm but moves towards sub 0.30 mm thicknesses are driving the electrical steel market.

In an embodiment the non-oriented electrical steel strip or sheet with the electrically insulating layer is further processed by stamping or cutting laminations from the strip or sheet, and wherein a plurality of laminations is stacked to form an electrical steel stack, and wherein the electrical steel stack is subsequently fully cured or bonded while applying pressure and/or heat and while optionally applying a magnetic field to align the magnetic dipoles in the magnetic nanoparticles, to produce an electrical steel stack for a generator, transformer or electrical machine, such as an electric motor for electric vehicles (e.g. EV, HEV, PHEV), for domestic appliances (lawn mower or vacuum cleaner), industrial appliances, robotic appliances or space technology appliances or the like.

According to a second aspect the invention is also embodied in an electrically insulating non-oriented electrical steel strip or sheet, produced according the method according to the invention, comprising a non-oriented electrical steel substrate coated on one or both sides with an electrically insulating layer with embedded magnetic nano-particles according to claim 9. Preferred embodiments are provided in the dependent claims.

According to a third aspect the invention is also embodied in the use of the electrically insulating non-oriented electrical steel strip or sheet according to the invention to produce laminations from the strip or sheet, e.g. by stamping or cutting, and to stack a plurality of laminations to form an electrical steel stack and to subsequently fully cure the lacquer and/or bind the laminations together in the stack or while applying pressure and/or heat and while applying an optional magnetic field to align the magnetic dipoles in the nanoparticles.

The intended application for this patent is in the automotive industry. However, it will also be available to other areas of application in which electric motors are utilised, including for example in the railway applications (e.g trains), manufacturing (robotics), space (satellite technology), domestic (lawnmowers and vacuum cleaners), commercial (goods transport and manipulation) and construction (forklift trucks) industries

Also electrical steel stacks are used in electrical rails, linear motors, electrical generators and electrical transformers and the invention can also be used to improve the efficiency of these electrical machines.

### Example

### 1. Preparation of the bonding lacquer

A Bisphenol A type epoxy lacquer resin (Axalta Voltatex^{®} 1175WL) can be used to produce a dispersed NP solution. The lacquer was diluted (5-25% in water) for suitability for use with a roll-coating system, and the density, pH and viscosity was measured. Density was measured using a hydrometer immersed in 250 ml of the diluted lacquer and gave values of approximately 1.05 g/cm2. pH was measured using pH paper, giving values of approximately pH 9. Viscosity was measured using a viscometer flow cup (DIN 2431, 4mm diameter orifice, 125 ml of volume) and gave a value of approximate dynamic viscosity of below 5000 cP, which is a value suitable for use with a roll-coating system used in these experiments.

### 2. Integration of the magnetic nanoparticles

Magnetic nanoparticles (NPs), of dimensions of <100 nm, such as iron oxide (Fe₃O₄), nickel powder (Ni), nickel oxide nanowires (NiO, L ~20 nm × 10 µm) or iron/nickel oxide (Fe₂O₃/NiO), can be dispersed in the lacquer solution using mechanical mixing or ultrasonic agitation techniques.

### 3. Electrical steel coating and pre-curing

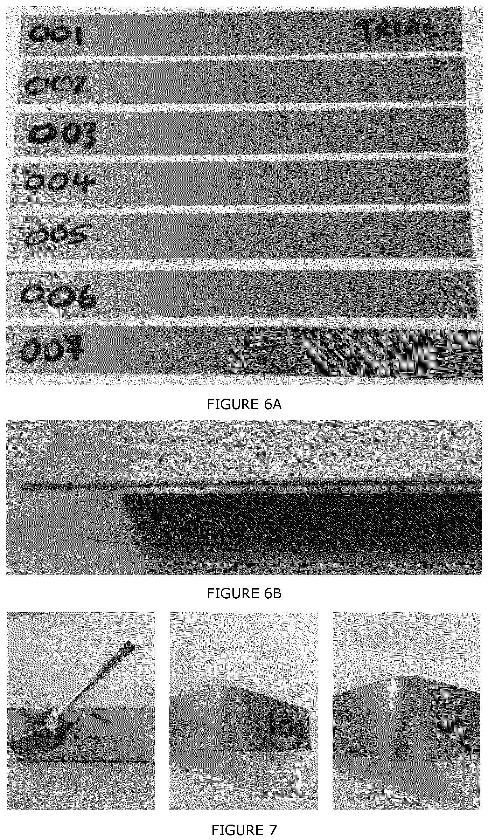

Test samples of thin laminations (termed Epsteins) of a standard NGO electrical steel of 300 mm x 60 mm x approx. 0.2-0.4 mm dimensions, are coated with the lacquer using a roll-coater (type Encon Engineers ULTIMO 5239.00). The roll-coating produces lacquer coated Epsteins with coatings of varying thickness depending on coating conditions (e.g. roller speed, roller separation, Epstein thickness). In the example in figure 6, lacquer thicknesses of approximately 2.5 µm thickness per side were achieved, which were precured in an oven following the manufacturers specifications (240 °C for 25-30 seconds) immediately after coating.

### 4. Durability and electrical conductivity tests - single Epsteins

Tests have been completed on single lacquer coated Epsteins to examine electrical conductivity of the lacquer coating using a Franklin resistivity tester according to ASTM A717, where a surface insulation resistance greater than 200 Ωcm² was considered acceptable. Further, to examine the coating durability, the coated Epstein was subjected to a 90° bend test and the lacquer on the external bend examined visually for cracks (figure 7).

### 5. Bonding

A subsequent bonding test utilised a bracket, consisting of two metal plates held together with nuts and bolts, to apply pressure to a stack of coated Epsteins during heating for the final curing. A torque wrench (7000A, Wera) was used to apply approx. 25 Nm torque, estimated to give 2.5 N/mm² force - slightly below the lacquer manufacturers specification of 3 N/mm² - and placed in the oven (240 °C for 2 minutes) producing a successful bonding between Epsteins (figure 6).

### 6. Magnetic properties - Power losses and magnetostriction

The magnetic performance of the coated Epsteins can be tested for magnetic power loss and magnetostriction, both individually and as part of an electrical steel stack. The magnetic properties of the electrical steel laminations can be measured at relevant measurement frequencies (e.g. 50, 400, and 1000 Hz). The magnetic properties of the electrical steel laminations (200-340 µm thick) mentioned above were tested, uncoated, at 50Hz and 1.7T magnetic field strength, giving power losses of 2-2.5 W/kg. Magnetostriction and power loss in electrical steels are improved when the steel laminations are mechanically constrained by a coating. The presence of magnetic material in the lacquer reduces these effects by improving lacquer stiffness around the electrical steel laminations.

### 7. Magnetic properties - magnetic permeability

Further, magnetic materials enhance the field produced by the motor windings. The stronger the magnetic flux through the electrical steel core, the more efficient the electrical motor. A motor requires low core losses, high permeability and high saturation magnetic polarizability. Magnetic permeability (µ) is the measure of the degree of magnetisation ability of a material and typically is measured against the magnetic permeability of vacuum (µ₀) at different applied magnetic field strengths (B in Tesla), to give relative permeability (µᵣ). Electrical steel has a µᵣ of 4000 (@0.002T) while a polymer lacquer typically has a µᵣ of approx. 1.5. For a laminated electrical steel core with a stacking factor of 0.95, an effective µr of 3800 is achieved. However, because of the addition of magnetic nanoparticles to the lacquer the lamination factor increases to 0.96 (approx. 10% nanoparticles by volume), and assuming example µr values of 600 (e.g. high purity [99%] Ni) or 5000 (e.g. high purity [99.8%] Fe), increases in effective µr of 0.15% and 1.25% respectively can be achieved, thereby improving magnetic flux and consequently improving motor efficiency.

### Brief description of the drawings

The invention will now be explained by means of the following, non-limiting figures.

Conventional electrical steels are FeSi alloys with silicon contents between 0.2 and 3.2 wt.% Si. A high silicon content benefits the magnetic properties. Silicon increases the electrical resistance thereby lowering eddy current losses resulting in an overall positive effect on total losses. But silicon content is limited due to processing factors. Si above 2.4 wt.% is unusual due to deteriorating workability, especially cold rolling, which is essential to achieve the required small strip thicknesses. These small thicknesses are desired because eddy current losses increase with increasing thickness. Another effective measure to improve magnetic properties of electrical steel strip is providing a rather large optimum grain size and a favourable texture. A larger grain size decreases hysteresis losses but also impairs workability.

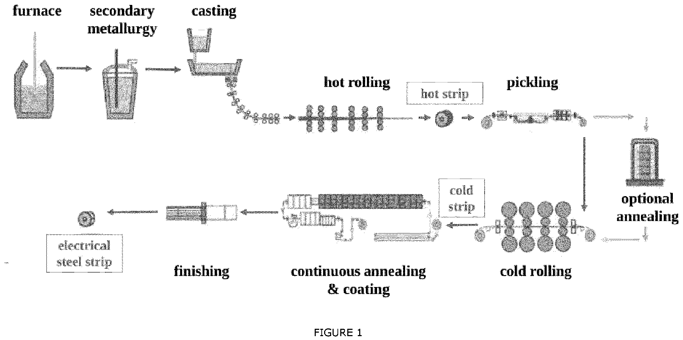

The process steps of electrical steel sheet production are shown schematically in figure 1 (not to scale) and these include the continuous (thin) slab casting, hot rolling, pickling, cold-rolling and annealing & coating of the strip, and the coiling of the strip, or the cutting of the strip into steel sheets or sheet products.

Hot rolling primarily serves a structural improvement and a thickness reduction of the steel strip, required for the subsequent processing steps. The temperatures further lead to effects of recovery, recrystallization and grain growth immediately after deformation. As a result of these physical processes the microstructure and texture change strongly, dependent on many different rolling parameters such as temperature, characteristics of the roll gap, rolling speed or rolling forces. These factors are crucial for texture and microstructure evolution, thus influencing the final material properties.

In the cold-rolling process the final thickness is reached. The influence parameters are largely equivalent to the parameters during hot rolling with the exception of the temperature and its influence on the recovery and recrystallization. However, the deformation condition and microstructure of the cold strip is triggering the recovery and recrystallization during the subsequent annealing step. The development of texture and microstructure during cold rolling, depends on the total thickness reduction as well as the thickness reduction per rolling pass but additionally to a large degree on the properties of the input hot strip.

The annealing treatment of cold strip is a substantial processing step in the production of electrical steel. During this process the required application properties are further influenced and shaped. Mechanical and magnetic properties are a direct result of the microstructure, texture and material conditions of the annealed cold strip. In the annealing step the strip is cleaned, recrystallised and coated with an insulation layer. Whenever the carbon content of the material is higher than approx. 30 ppm, a decarburization function must be integrated in the annealing furnace to prevent magnetic overaging.

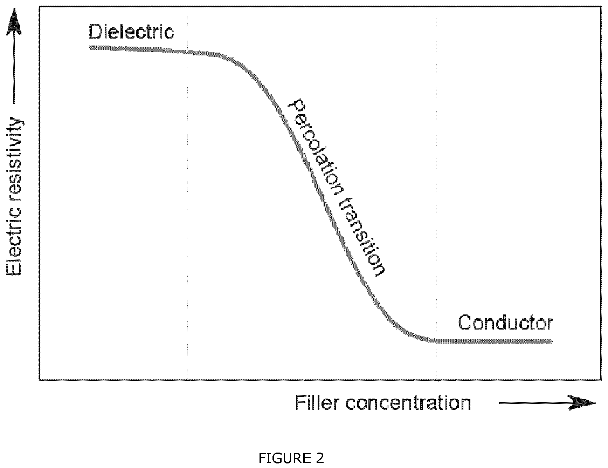

Figure 2 shows a schematic image of the percolation threshold. At the left hand side the material is not electrically conducting, whereas at the right hand side it is fully conducting. In between there is a percolation transition where the conductivity starts to increase. Within the context of this invention it is crucial that the embedded particles do not form a connected network, so that the electrical resistivity of the insulating layer stays intact.

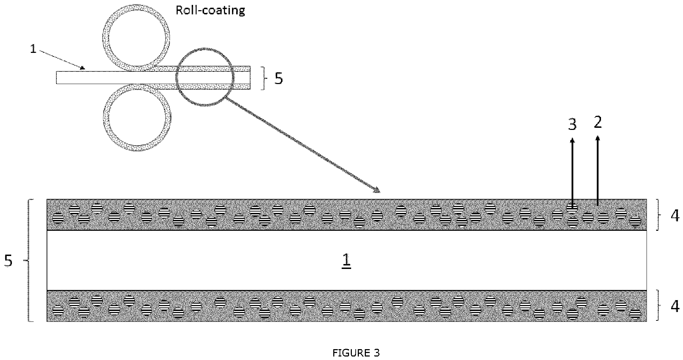

Figure 3 shows a schematic representation of an embodiment of the method according to the invention as described herein above. An electrically insulating steel sheet or strip according to the invention (5) is made up of NGO-ES sheet (1) is coated on both sides by an electrically insulating layer (4) with embedded magnetic nanoparticles (3) in a (partially) cured lacquer matrix (2). The lacquer is applied by roll coating in this example. Note that the dimensions in the figures 3 to 5 are not to scale.

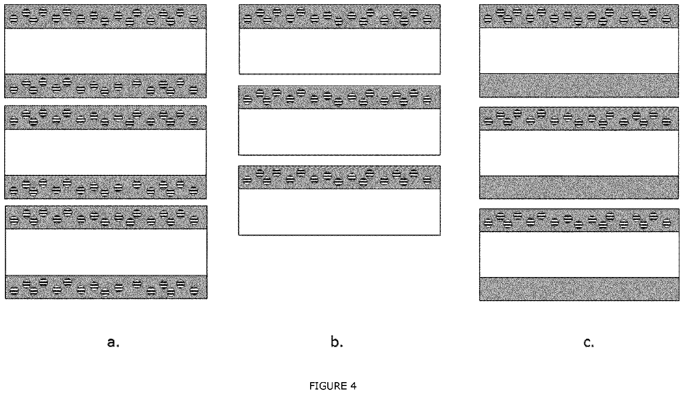

Figure 4 shows three different types of electrically insulating steel strip or sheet according to the invention. Figure 4a shows a stack comprising 3 electrically insulating steel sheets, coated on both sides with an electrically insulating layer with embedded magnetic nanoparticles in a matrix. Figure 4b shows a stack comprising 3 electrically insulating steel sheets, coated on only one side with an electrically insulating layer with embedded magnetic nanoparticles in a matrix. Figure 4c shows a stack comprising 3 electrically insulating steel sheets, coated on one side with an electrically insulating layer with embedded magnetic nanoparticles in a matrix and on the other side with an adhesion layer. All stacks have intermittent layers of NGO-ES and electrically insulating layer in between. The ratio NGO-ES to electrically insulating layers is highest in figure 4b. It is noted that the stacks are depicted schematically and that with a real stack there would be no space between the subsequent laminates.

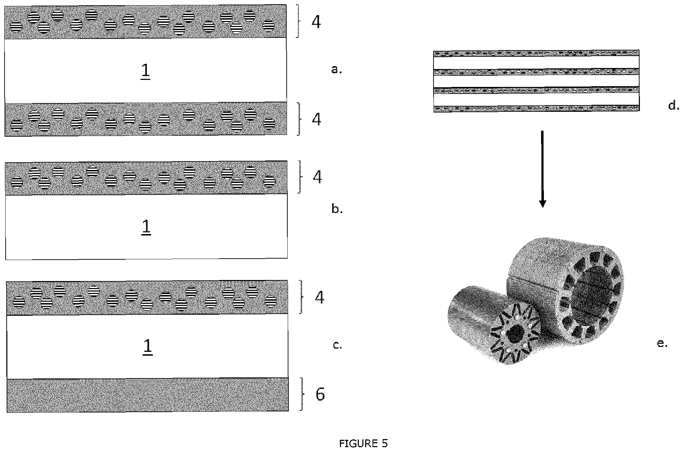

Figure 5 shows the three different types of electrically insulating steel strip or sheet according to the invention. Figure 5a shows a sheet 1 coated on both sides with an electrically insulating layer with embedded magnetic nanoparticles 4 in a matrix. Figure 4b shows a sheet 1 coated on only one side with an electrically insulating layer with embedded magnetic nanoparticles in a matrix and figure 4c shows a sheet 1 coated on one side with an electrically insulating layer 4 with embedded magnetic nanoparticles in a matrix and on the other side with an adhesion layer 6. Figure 4d shows a stack of three steel sheets with electrically insulating layers with embedded magnetic nanoparticles in a between the steel sheets, and figure 4e shows an image of an actual stack which clearly shows that an actual stack comprises many more laminates than the 3 laminates schematically depicted in figures 4 and 5.

Figure 6a shows the coated and partially cured Epsteins and 6b two Epsteins bonded together using the fully cured lacquer coatings.

Figure 7. Example of a 90° bend test of a lacquer coated sample. No cracks are observed.

## Claims

1. A method for producing an electrically insulating non-oriented electrical steel strip or sheet for producing laminates for electrical steel stacks, comprising the subsequent steps of :
• preparing a cold-rolled non-oriented electrical steel strip or sheet;
• annealing the cold-rolled steel strip or sheet;
• coating the annealed electrical steel strip or sheet on one or both sides with
i). a curable organic lacquer provided with dispersed magnetic nanoparticles followed by at least a partial curing of the lacquer to form a green insulation layer to allow transportation, cutting or shaping, or with
ii). a solid polymer film with embedded magnetic nanoparticles applied onto the annealed steel strip or sheet by direct extrusion or film lamination,
to provide an electrically insulating layer on the one or both sides of the annealed electrical steel strip or sheet;
• optionally coiling the coated strip or stacking the coated sheet.

2. Method according to claim 1 wherein the curable organic lacquer comprising the magnetic nanoparticles is applied onto the annealed steel strip or sheet by roll-coating.

3. Method according to claim 1 or 2 wherein the partial curing of the lacquer is performed while a magnetic field is applied to align the magnetic dipoles in the magnetic nanoparticles.

4. Method according to claim 1 wherein the solid polymer film with embedded magnetic nanoparticles is laminated onto the electrical steel strip or sheet by
• preheating the electrical steel strip or sheet (to a temperature of at least 100°C);
• producing a laminate by adhering the polymer film onto one or both sides of the preheated electrical steel strip or sheet by pressing the polymer film onto the metal strip by means of laminating rolls wherein a laminating pressure is exerted on the laminate in the nip between the laminating rolls, wherein optionally a magnetic field is applied to align the magnetic dipoles in the magnetic nanoparticles;
• cooling or quenching the coated electrical steel strip or sheet.
• optionally coiling the coated strip or stacking the coated sheet.

5. Method according to any one of claims 1 to 4 wherein the content of magnetic nanoparticles in the green insulation layer is between 1 and 50 vol.%.

6. Method according to any one of claims 1 to 5 wherein the magnetic nanoparticles are selected from Fe, Co, Ni, Pt, Ti, Zn, Cr, Al, Si, their alloys or organometallics.

7. Method according to any one of claims 1 to 5 wherein the magnetic nanoparticles are selected from the oxides of Fe, Co, Ni, Pt, Ti, Zn, Cr, Al or Si.

8. Method according to any one of claims 1 to 6 wherein at least one dimension of the magnetic nanoparticles is from 1 to 100 nm.

9. Method according to any one of claims 1 to 8 wherein the non-oriented electrical steel strip or sheet with the electrically insulating layer is further processed by stamping or cutting laminations from the strip or sheet, and wherein a plurality of laminations is stacked to form an electrical steel stack, and wherein the electrical steel stack is subsequently fully cured or bonded while applying pressure and/or heat and while optionally applying a magnetic field to align the magnetic dipoles in the magnetic nanoparticles, to produce an electrical steel stack.

10. An electrically insulating non-oriented electrical steel strip or sheet, produced according the method of any one of claims 1 to 8, comprising a non-oriented electrical steel substrate coated on one or both sides with an electrically insulating layer with embedded magnetic nano-particles.

11. The steel strip or sheet according to claim 10 wherein the magnetic nanoparticles are selected from Fe, Co, Ni, Pt, Ti, Zn, Cr, Al, Si, their alloys or organometallics.

12. The steel strip or sheet according to claim 10 or 11 wherein the magnetic nanoparticles are selected from the oxides of Fe, Co, Ni, Pt, Ti, Zn, Cr, Al or Si.

13. The steel strip or sheet according to any one of claims 10 to 12 wherein at least one dimension of the nanoparticles is from 1 to 100 nm

## Patentansprüche

1. Verfahren zur Herstellung eines elektrisch isolierenden, nicht orientierten Elektrostahlbandes oder -blechs zur Herstellung von Laminaten für Elektrostahlstapel, umfassend die folgenden Schritte:
• Vorbereiten eines kaltgewalzten, nicht orientierten Elektrostahlbandes oder -blechs;
• Glühen des kaltgewalzten Stahlbandes oder -blechs;
• Beschichten des geglühten Elektrobandes oder -blechs auf einer oder beiden Seiten mit
i). einem härtbaren organischen Lack, der mit dispergierten magnetischen Nanopartikeln versehen ist, gefolgt von einer zumindest teilweisen Aushärtung des Lacks zur Bildung einer grünen Isolierschicht, um den Transport, das Schneiden oder die Formgebung zu ermöglichen, oder mit
ii). einem festen Polymerfilm mit eingebetteten magnetischen Nanopartikeln, der durch Direktextrusion oder Filmlaminierung auf das geglühte Stahlband oder -blech aufgebracht wird,
um eine elektrisch isolierende Schicht auf einer oder beiden Seiten des geglühten Elektrostahlbandes oder -blechs anzubringen;
• optional Aufwickeln des beschichteten Bandes oder Stapeln des beschichteten Blechs.

2. Verfahren nach Anspruch 1, wobei der härtbare organische Lack, der die magnetischen Nanopartikel umfasst, durch Walzenbeschichtung auf das geglühte Stahlband oder -blech aufgebracht wird.

3. Verfahren nach Anspruch 1 oder 2, wobei das teilweise Aushärten des Lacks durchgeführt wird, während ein Magnetfeld angelegt wird, um die magnetischen Dipole in den magnetischen Nanopartikeln auszurichten.

4. Verfahren nach Anspruch 1, wobei der feste Polymerfilm mit eingebetteten magnetischen Nanopartikeln auf das Elektrostahlband oder -blech laminiert wird durch
• Vorwärmen des Elektrobandes oder -blechs (auf eine Temperatur von mindestens 100 °C);
• Herstellen eines Laminats durch Aufkleben des Polymerfilms auf eine oder beide Seiten des vorgewärmten Elektrostahlbandes oder -blechs durch Aufpressen des Polymerfilms auf das Metallband mittels Laminierwalzen, wobei im Spalt zwischen den Laminierwalzen ein Laminierdruck auf das Laminat ausgeübt wird, wobei optional ein Magnetfeld angelegt wird, um die magnetischen Dipole in den magnetischen Nanopartikeln auszurichten;
• Abkühlen oder Abschrecken des beschichteten Elektrostahlbandes oder -blechs.
• optional Aufwickeln des beschichteten Bandes oder Stapeln des beschichteten Blechs.

5. Verfahren nach einem der Ansprüche 1 bis 4, wobei der Gehalt an magnetischen Nanopartikeln in der grünen Isolationsschicht zwischen 1 und 50 Vol.-% liegt.

6. Verfahren nach einem der Ansprüche 1 bis 5, wobei die magnetischen Nanopartikel ausgewählt sind aus Fe, Co, Ni, Pt, Ti, Zn, Cr, Al, Si, deren Legierungen oder Organometallen.

7. Verfahren nach einem der Ansprüche 1 bis 5, wobei die magnetischen Nanopartikel aus den Oxiden von Fe, Co, Ni, Pt, Ti, Zn, Cr, Al oder Si ausgewählt werden.

8. Verfahren nach einem der Ansprüche 1 bis 6, wobei mindestens eine Abmessung der magnetischen Nanopartikel 1 bis 100 nm beträgt.

9. Verfahren nach einem der Ansprüche 1 bis 8, wobei das nicht orientierte Elektrostahlband oder -blech mit der elektrisch isolierenden Schicht weiterverarbeitet wird, indem Laminierungen aus dem Band oder Blech gestanzt oder geschnitten werden, und wobei eine Vielzahl von Laminierungen zu einem Elektrostahlstapel gestapelt werden, und wobei der Elektrostahlstapel anschließend unter Anwendung von Druck und/oder Wärme und optional unter Anwendung eines Magnetfelds zum Ausrichten der magnetischen Dipole in den magnetischen Nanopartikeln vollständig ausgehärtet oder verbunden wird, um einen Elektrostahlstapel herzustellen.

10. Elektrisch isolierendes, nicht orientiertes Elektrostahlband oder -blech, das nach dem Verfahren nach einem der Ansprüche 1 bis 8 hergestellt wurde, umfassend ein nicht orientiertes Elektrostahlsubstrat, das auf einer oder beiden Seiten mit einer elektrisch isolierenden Schicht mit eingebetteten magnetischen Nanopartikeln beschichtet ist.

11. Stahlband oder -blech nach Anspruch 10, wobei die magnetischen Nanopartikel ausgewählt sind aus Fe, Co, Ni, Pt, Ti, Zn, Cr, Al, Si, deren Legierungen oder Organometallen.

12. Stahlband oder -blech nach Anspruch 10 oder 11, wobei die magnetischen Nanopartikel aus den Oxiden von Fe, Co, Ni, Pt, Ti, Zn, Cr, Al oder Si ausgewählt sind.

13. Stahlband oder -blech nach einem der Ansprüche 10 bis 12, wobei mindestens eine Dimension der Nanopartikel 1 bis 100 nm beträgt.

## Revendications

1. Procédé de production d'une bande ou tôle d'acier électrique non orienté isolante électriquement, permettant de produire des stratifiés pour piles d'acier électrique, comprenant les étapes consistant à :
• préparer une bande ou tôle d'acier électrique non orienté, stratifiée à froid ;
• recuire la bande ou tôle d'acier stratifiée à froid ;
• revêtir la bande ou tôle d'acier électrique recuite sur une ou deux faces avec
i). une laque organique durcissable pourvue de nanoparticules magnétiques dispersées, suivi d'un durcissement au moins partiel de la laque pour former une couche d'isolation verte permettant le transport, la découpe ou la mise en forme, ou avec
ii). un film polymère solide avec des nanoparticules magnétiques incorporées, appliqué sur la bande ou tôle d'acier recuite par extrusion directe ou par stratification de film,
afin de fournir une couche électriquement isolante sur l'une ou les deux faces de la bande ou tôle d'acier électrique recuite ;
• éventuellement, enrouler la bande revêtue ou empiler la tôle revêtue.

2. Procédé selon la revendication 1, dans lequel la laque organique durcissable comprenant les nanoparticules magnétiques est appliquée sur la bande ou tôle d'acier recuite par revêtement au rouleau.

3. Procédé selon la revendication 1 ou 2, dans lequel le durcissement partiel de la laque est effectué pendant qu'un champ magnétique est appliqué pour aligner les dipôles magnétiques dans les nanoparticules magnétiques.

4. Procédé selon la revendication 1, dans lequel le film polymère solide avec des nanoparticules magnétiques incorporées est stratifié sur la bande ou tôle d'acier électrique par
• préchauffage de la bande ou tôle d'acier électrique (à une température d'au moins 100 °C) ;
• production d'un stratifié en collant le film polymère sur l'une ou les deux faces de la bande ou tôle d'acier électrique préchauffée en pressant le film polymère sur la bande métallique au moyen de rouleaux de stratification dans lequel une pression de stratification est exercée sur le stratifié dans l'espace entre les rouleaux de stratification, dans lequel un champ magnétique est éventuellement appliqué pour aligner les dipôles magnétiques dans les nanoparticules magnétiques ;
• le refroidissement ou la trempe de la bande ou tôle d'acier électrique revêtue.
• éventuellement, l'enroulement de la bande revêtue ou l'empilement de la feuille revêtue.

5. Procédé selon l'une quelconque des revendications 1 à 4, dans lequel la teneur en nanoparticules magnétiques dans la couche d'isolation verte est comprise entre 1 et 50 % en volume.

6. Procédé selon l'une quelconque des revendications 1 à 5, dans lequel les nanoparticules magnétiques sont choisies parmi Fe, Co, Ni, Pt, Ti, Zn, Cr, Al, Si, leurs alliages ou organométalliques.

7. Procédé selon l'une quelconque des revendications 1 à 5, dans lequel les nanoparticules magnétiques sont choisies parmi les oxydes de Fe, Co, Ni, Pt, Ti, Zn, Cr, Al ou Si.

8. Procédé selon l'une quelconque des revendications 1 à 6, dans lequel au moins une dimension des nanoparticules magnétiques va de 1 à 100 nm.

9. Procédé selon l'une quelconque des revendications 1 à 8, dans lequel la bande ou tôle d'acier électrique non orienté avec la couche électriquement isolante est davantage traitée par estampage ou découpage de strates dans la bande ou tôle, et dans lequel une pluralité de strates sont empilées pour former une pile d'acier électrique, et dans lequel la pile d'acier électrique est ensuite entièrement durcie ou collée tout en appliquant une pression et/ou de la chaleur et en appliquant éventuellement un champ magnétique pour aligner les dipôles magnétiques dans les nanoparticules magnétiques, afin de produire une pile d'acier électrique.

10. Bande ou tôle d'acier électrique non orienté isolante, produite selon le procédé selon l'une quelconque des revendications 1 à 8, comprenant un substrat d'acier électrique non orienté revêtu sur une ou deux faces d'une couche électriquement isolante avec des nanoparticules magnétiques incorporées.

11. Bande ou tôle d'acier selon la revendication 10, dans laquelle les nanoparticules magnétiques sont choisies parmi Fe, Co, Ni, Pt, Ti, Zn, Cr, Al, Si, leurs alliages ou organométalliques.

12. Bande ou tôle d'acier selon la revendication 10 ou 11, dans laquelle les nanoparticules magnétiques sont choisies parmi les oxydes de Fe, Co, Ni, Pt, Ti, Zn, Cr, Al ou Si.

13. Bande ou tôle d'acier selon l'une quelconque des revendications 10 à 12, dans laquelle au moins une dimension des nanoparticules va de 1 à 100 nm
